# EUROPEAN PATENT SPECIFICATION

(11) **EP 2 976 393 B1**
(45) Date of publication and mention of the grant of the patent: **13.12.2017**
(21) Application number: 14713888.7
(22) Date of filing: 13.03.2014
(51) Int. Cl.: C09C 3/10, C09D 11/00

(54) **INKS**
TINTEN
ENCRES

(30) Priority: 20.03.2013 GB 201305109
(43) Date of publication of application: 27.01.2016
(73) Proprietor: Fujifilm Imaging Colorants, Inc., New Castle, Delaware 19720 (US)
(72) Inventor: MORRIS, Daniel, Manchester M9 8ZS (GB); CORDWELL, Janette, Manchester M9 8ZS (GB); DOUBLE, Philip, Manchester M9 8ZS (GB); EDWARDS, Martin, Manchester M9 8ZS (GB)
(74) Representative: Revell, Christopher
(86) International application number: PCT/GB2014/050751
(87) International publication number: WO 2014/147374

(56) References cited:
- EP-A1- 2 090 627
- WO-A1-01/44326
- WO-A1-2008/042320
- WO-A2-2012/085541
- JP-A- 2004 195 706

## Description

This invention relates to inks, a process for ink-jet printing, ink-jet ink containers, ink sets and ink-jet printers.

Ink-jet printing is a non-impact printing technique in which droplets of an ink are ejected through fine nozzles onto a substrate without bringing the nozzles into contact with the substrate. There are basically three types of ink-jet printing:
i) Continuous ink-jet printing uses a pressurized ink source that produces a continuous stream of ink droplets from a nozzle. The droplets of ink are directed either thermally or by electrostatic means at a nominally constant distance from the nozzle. Those droplets which are not successfully deflected are recycled to the ink reservoir via a gutter.
ii) Drop-on-demand ink-jet printing where the ink is stored in a cartridge and fired from the print-head nozzle using a pressurization actuator (usually thermal or piezoelectric). With drop-on-demand printing only the drops that are required for printing are produced.
iii) Re-circulating ink-jet printing where the ink is continuously re-circulated in the print-head and (as in drop-on demand printing) only drops required for printing are drawn off to the nozzle.

Each of these types of ink-jet printing presents unique challenges. Thus, in continuous ink-jet printing ink active solvent monitoring and regulation is required to counter solvent evaporation during the time of flight of droplets which are ejected from the nozzle, but which do not give rise to a printed image (i.e. the time between nozzle ejection and gutter recycling), and from the venting process whereby excess air (drawn into the reservoir when recycling unused drops) is removed.

In drop-on-demand printing the ink may be kept in the cartridge for long periods when it can deteriorate and form precipitates which can, in use, block the fine nozzles in the print-head. This problem is particularly acute with pigment inks where the suspended pigment particles can settle out.

Re-circulating ink-jet printing avoids these problems. Since the ink is constantly circulating it lessens the chance of the pigment settling and as the ink is only removed to the nozzle as required to form an image solvent evaporation is minimised.

Re-circulating ink-jet printers have found particular utility in the industrial sector. Industrial ink-jet printers are required to work at high speeds. Optimally a print-head for an industrial ink-jet printer will have multiple nozzles arranged at a high density to enable high productivity single-pass printing with acceptable print resolutions.

International Patent Application WO2012/085541 discloses aqueous inks containing a self-dispersible pigment and a latex binder which are suitable for use in drop-on-demand ink-jet printers.

Ink formulation for all forms of ink-jet printing is extremely demanding. It is especially difficult to formulate inks able to work in these high speed single pass print-heads.

Thus, the present invention provides pigment inks formulated so as to:
(i) not cause nozzle blockage in a re-circulating head;
(ii) allow fast drying by being more volatile than standard ink-jet inks. This is essential in an industrial process since it enables high production speeds with low energy consumption (i.e. low temperature printing);
(iii) give images of high durability by incorporating a carefully selected latex and by optimising the ink vehicle design;
(iv) not cause face-plate wetting in the print-head.

The wetting capability of a liquid is a function of its surface tension relative to the surface energy of the solid surface. Thus, if the molecules of the liquid have a stronger attraction to the molecules of the solid surface than to each other (the adhesive forces are stronger than the cohesive forces), wetting of the surface occurs. However, if the molecules in the liquid are more strongly attracted to each other than the molecules of the solid surface (the cohesive forces are stronger than the adhesive forces), the liquid beads-up and does not wet the surface. The degree of wetting of a liquid on a particular surface may be determined by measuring the contact angle of a drop of the liquid placed on the surface. A liquid is said to wet a surface when the contact angle is less than 90 degrees. The lower the contact angle the greater the degree of wetting.

It is challenging to design a volatile ink containing a low film-forming temperature latex (as required in (ii) and (iii)) which does not wet the face plate of the print-head.

Therefore, according to a first aspect of the present invention there is provided an ink comprising:
(a) 0.1 to 10 parts of a self-dispersible pigment;
(b) 5 to 15 parts of a polymeric latex binder with a glass transition temperature in the range of from 10°C to -60°C;
(c) 5 to 15 parts of one or more polar organic solvent(s) with a solubility parameter at 25°C greater than 27.5;
(d) 0.1 to 3 parts of an acetylenic surfactant;
(e) 0.001 to 5 parts of biocide;
(f) 0 to 10 parts of a viscosity modifier;
(g) 0 to 5 parts of one or more organic solvents with a solubility parameter at 25°C less than 27.5;
(h) 0 to 5 parts of a cross linking agent; and
(i) the balance to 100 parts water;
wherein the ratio of latex binder to total organic solvent is in the range of from 1:3 to 3:1.

All parts and percentages herein (unless stated otherwise) are by weight.

Preferably the ratio of latex binder to total organic solvent is in the range of from 1:2 to 2:1.

A "self-dispersible pigment" is a pigment preparation which is able to freely, rapidly and permanently disperse when added to a liquid medium. If the pigment carries a charged group on its surface (either directly or via the associated polymeric dispersant) then it preferably has a counter ion.

The self-dispersible pigment is preferably derived from any of the classes of pigments described in the Third Edition of the Colour Index (1971) and subsequent revisions of, and supplements thereto, under the chapter headed "Pigments".

Examples of suitable organic pigments are those from the azo (including disazo and condensed azo), thioindigo, indanthrone, isoindanthrone, anthanthrone, anthraquinone, isodibenzanthrone, triphendioxazine, quinacridone and phthalocyanine series, especially copper phthalocyanine and its nuclear halogenated derivatives, and also lakes of acid, basic and mordant dyes. Carbon black, although often regarded as being inorganic, behaves more like an organic pigment in its dispersing properties and is also suitable. Preferred organic pigments are phthalocyanines, especially copper phthalocyanine pigments, azo pigments, indanthrones, anthanthrones, quinacridones and carbon black pigments.

The pigment is preferably a yellow, cyan, magenta, or black pigment. The pigment may be a single chemical species or a mixture comprising two or more chemical species (e.g. a mixture comprising two or more different pigments). In other words, two or more different pigments solids may be used in the process of the present invention.

More preferably the pigment is selected from Carbon Black; Pigment Blue 15:3; Pigment Yellow 74 and Pigment Red 122.

The pigment in the self-dispersible pigment may be dispersed by any means known in the art. This may involve coating the surface of the pigment with a suitable dispersant or mixture thereof. The dispersant may be anionic, cationic or non-ionic, and may comprise a random, block or comb polymer. Suitable dispersants include but are not limited to poly(meth)acrylates, polyurethanes, polyesters and polyethers.

Other preferred self-dispersible pigments may be prepared by chemically modifying the surface of the pigment. This is particularly preferred for carbon black where the pigment surface may be oxidised to render the carbon black water dispersible. Suitable oxidants include air, hydrogen peroxide, hypochlorites, nitric acid, nitrogen dioxide, ozone and persulfates.

Thus, in one preferred embodiment of the present invention the self-dispersible pigment is a carbon black whose surface has been oxidised.

Organic pigments may also have charged groups introduced onto their surface using either reagents specific to that particular class/type of pigment or more general reactions such as sulfonation.

Alternately the self-dispersible pigment may have a charged group or polymeric dispersant chemically covalently attached to its surface.

Thus, for example, carbon black is able to react with diazonium salts. This allows the introduction of a specific charged group onto the surface of the carbon black. A phenyl spacer group is commonly used with the charged/dispersing group being bound to the phenyl. Examples of such charged groups are sulfonate, carboxyl, phosphonate and biphosphonate. It is also possible using diazonium chemistry to introduce a range of polymeric dispersants to the surface of carbon black.

Certain organic pigments may also have charged groups and polymeric dispersants introduced on to their surface via diazonium chemistry. The dispersants attached to the surface of the self dispersible pigments may be of any type known a skilled person. Dispersants may be of general applicability or designed for use with a specific pigment.

In a preferred embodiment of the invention the self-dispersible pigment is a pigment with a charged group or polymeric dispersant covalently attached to the surface of the pigment by means of a diazonium compound.

One preferred form of dispersant is a diblock copolymer A-B or a triblock copolymer A-B-A where block B has an affinity for the pigment and block A is responsible for colloidal stabilisation. With organic pigments it is possible to synthesise a specific pigment comprising such a dispersant rather than attaching the dispersant to the pigment in a post synthetic step.

It is preferred that in component (a) the self-dispersible pigment comprises a dispersant crosslinked around a pigment.

In one particularly preferred embodiment in component (a) the self-dispersible pigment comprises a carboxy-functional dispersant crosslinked around a pigment core by a crosslinking agent having at least two groups selected from oxetane, carbodiimide, hydrazide, oxazoline, aziridine, isocyanate, N-methylol, keteneimine, isocyanurate and epoxy groups, especially two or more epoxy groups.

The dispersant, prior to crosslinking with the crosslinking agent, preferably has an acid value of at least 125mg KOH/g.

The dispersant preferably has one or more oligomeric dispersing groups.

In order to provide water-dispersibility, the polymer-encapsulated pigment particles preferably have carboxy groups (i.e. not all of the carboxy groups in the dispersant are crosslinked to form the polymer-encapsulated pigment particles).

The polymer-encapsulated pigment particles may be prepared by crosslinking some of the carboxy groups in a carboxy-functional dispersant in the presence of a pigment and a crosslinking agent, preferably at a temperature of less than 100°C and/or a pH of at least 6. Such crosslinking is usually performed in an aqueous medium, for example in a mixture comprising water and organic solvent. Suitable mixtures comprising water and organic solvent are as described above in relation to the ink.

Preferably, the polymer-encapsulated pigment particles have a Z-average particle size of less than 500nm, more preferably from 10 to 400nm and especially from 15 to 300nm.

The Z-average particle size may be measured by any means, but a preferred method is by photo correlation spectroscopy devices available from Malvern® or Coulter®.

Suitable methods for making the polymer-encapsulated pigment particles are described in WO2006/064193 and WO2010/038071. In essence, a dispersant having carboxy groups is adsorbed onto a pigment and then some (but not all) of the carboxy groups are crosslinked to give a pigment dispersion where the pigment is permanently trapped within the crosslinked dispersant. Such particles may be obtained commercially from FUJIFILM Imaging Colorants Limited.

Preferably the carboxy-functional dispersants comprise benzyl methacrylate.

A preferred carboxy-functional dispersant is a copolymer comprising one or more hydrophobic ethylenically unsaturated monomers (preferably at least half of which by weight is benzyl methacrylate), one or more hydrophilic ethylenically unsaturated monomers having one or more carboxy groups; and optionally some or no hydrophilic ethylenically unsaturated monomers having one or more hydrophilic non-ionic groups.

An especially preferred carboxy-functional dispersant is a copolymer comprising:
(i) from 75 to 97 parts of one or more hydrophobic ethylenically unsaturated monomers comprising at least 50 parts of benzyl methacrylate;
(ii) from 3 to 25 parts of one or more hydrophilic ethylenically unsaturated monomers having one or more carboxy groups; and
(iii) 0 to 1 part of hydrophilic ethylenically unsaturated monomers having one or more hydrophilic non-ionic groups;
wherein the parts are by weight.

Typically and the sum of the parts (i), (ii) and (iii) adds up to 100.

It is preferred that the only hydrophobic ethylenically unsaturated monomer in component (i) is benzyl methacylate.

More preferably the carboxy-functional dispersant is a copolymer comprising:
(i) from 80 to 93 parts of one or more hydrophobic ethylenically unsaturated monomers comprising at least 50 parts benzyl methacrylate;
(ii) from 7 to 20 parts of one or more hydrophilic ethylenically unsaturated monomers having one or more carboxy groups;
(iii) 0 to 1 part of hydrophilic ethylenically unsaturated monomers having a hydrophilic non-ionic group;
wherein the parts are by weight.

Typically and the sum of the parts (i), (ii) and (iii) adds up to 100.

Preferably the hydrophobic monomers have no hydrophilic groups, whether ionic or non-ionic. For example, they are preferably free from water-dispersing groups.

Preferably, the hydrophobic ethylenically unsaturated monomers have a calculated log P value of at least 1, more preferably from 1 to 6, especially from 2 to 6.

A review by Mannhold, R. and Dross, K. (Quant. Struct-Act. Relat. 15, 403-409, 1996) describes how to calculate log P values.

Preferred hydrophobic ethylenically unsaturated monomers are styrenic monomers (e.g. styrene and alpha methyl styrene), aromatic (meth)acrylates (especially benzyl (meth)acrylate), C₁₋₃₀-hydrocarbyl (meth)acrylates, butadiene, (meth)acrylates containing poly(C₃₋₄)alkylene oxide groups, (meth)acrylates containing alkylsiloxane or fluorinated alkyl groups and vinyl naphthalene.

Preferably, the dispersant comprises the repeat units from copolymerising from 75 to 97, more preferably from 77 to 97, especially from 80 to 93 and most especially from 82 to 91 parts by weight of component (i).

Dispersants comprising at least 50 parts of benzyl (meth)acrylate monomer repeat units can provide polymer-encapsulated pigment dispersions with good stability and good optical density.

Component (i) preferably comprises at least 60 parts, more preferably at least 70 and especially at least 80 parts by weight of benzyl (meth)acylate. The remainder required to obtain the overall preferred amounts of hydrophobic monomers may be provided by any one or more of the above hydrophobic monomers other than benzyl (meth)acrylate. Preferably, benzyl (meth)acrylate is benzyl methacrylate (rather than benzyl acrylate).

In a preferred embodiment component (i) comprises only benzyl (meth)acrylate, more preferably only benzyl methacrylate.

Preferably, the monomers in component (ii) have a calculated log p value of less than 1, more preferably from 0.99 to -2, especially from 0.99 to 0 and most especially from 0.99 to 0.5, when calculated in the un-neutralised (e.g. free acid) form.

Preferred hydrophilic ethylenically unsaturated monomers for component (ii) having one or more carboxylic acid groups include beta carboxyl ethyl acrylate, itaconic acid, maleic acid, fumaric acid, crotonic acid, more preferably acrylic acid and especially methacrylic acid. Preferably, these ethylenically unsaturated monomers when polymerised provide the only ionic groups in the dispersant.

In a preferred embodiment component (ii) is or comprises methacrylic acid.

Preferably, the dispersant comprises the repeat units from copolymerising 3 to 25, more preferably 3 to 23, especially 7 to 20 and most especially 9 to 18 parts by weight of component (ii). This is especially so when component (ii) comprises, or more preferably is, methacrylic acid.

For the purposes of the present invention a monomer having both ionic and non-ionic hydrophilic groups is considered to belong to component (iii). Thus, all the ethylenically unsaturated monomers in component (ii) are free from hydrophilic non-ionic groups.

Preferably, the monomers in component (iii) have calculated log P values of less than 1, more preferably from 0.99 to -2.

Preferably, component (iii) is less than 1 part, more preferably less than 0.5 parts, especially less than 0.1 parts and most especially 0 parts (i.e. absent). In this way the dispersant contains no repeat units from hydrophilic monomers having one or more hydrophilic non-ionic groups.

Examples of hydrophilic non-ionic groups include polyethyleneoxy, polyacrylamide, polyvinyl pyrrolidone, hydroxy functional celluloses and poly vinyl alcohol. The most common ethylenically unsaturated monomer having a hydrophilic non-ionic group is polyethyleneoxy (meth) acrylate.

In embodiments where repeat units from component (iii) are present in the dispersant (for example 1 part by weight of component (iii)) then in one embodiment the amount of component (iii) is deducted from the preferred amounts of component (i). In this way the amounts of all the components (i), (ii) and (iii) still adds up to 100. Thus for embodiments where 1 part by weight of component (iii) is present the preferred amounts of component (i) expressed above would become from 74 to 96 (75-1 to 97-1), more preferably from 76 to 96 (77-1 to 97-1), especially from 79 to 92 (80-1 to 93-1) and most especially from 81 to 90 (82-1 to 91-1) parts by weight of component (i). In an another embodiment it is possible to deduct the amount of component (iii) from the preferred amounts of component (ii) so that again the sum of the amounts of components (i), (ii) and (III) adds up to 100 parts by weight.

The function of the carboxylic acid group(s) in the dispersant is primarily to cross-link with the crosslinking agent and to provide the subsequent polymer-encapsulated pigment particles with the ability to disperse in aqueous ink media. Where carboxylic acid group(s) are the only groups for stabilising the polymer-encapsulated pigment particles in the aqueous medium it is preferable to have a molar excess of carboxylic acid groups to carboxy-reactive groups (e.g. epoxy groups) in the crosslinking agent to ensure that unreacted carboxylic acid groups remain after the crosslinking reaction has been completed. In one embodiment the ratio of moles of carboxylic acid groups to moles of carboxy-reactive groups (e.g. epoxy groups) in the crosslinking agent is preferably from 10:1 to 1.1:1, more preferably from 5:1 to 1.1:1 and especially preferably from 3:1 to 1.1:1.

The dispersant may optionally have other stabilising groups. The choice of the stabilising groups as well as the amounts of such groups will depend to a large extent on the nature of the aqueous medium.

In embodiments where the crosslinking agent has one or more oligomeric dispersing group the dispersant preferably has an acid value of at least 125mg KOH/g.

The acid value of the dispersant, prior to crosslinking with the crosslinking agent, is preferably from 130 to 320 and more preferably from 135 to 250mg KOH/g. We have found that dispersants having such acid values provide resultant polymer-encapsulated pigment particles which exhibit good stability in aqueous inks and also have sufficient carboxy groups for subsequent crosslinking with the crosslinking agent. Preferably, the dispersant (prior to crosslinking) has a number average molecular weight of from 500 to 100,000, more preferably from 1,000 to 50,000 and especially from 1,000 to 35,000. The molecular weight may be measured by gel permeation chromatography.

The dispersant need not be totally soluble in the liquid medium used to make the polymer-encapsulated pigment particles. That is to say perfectly clear and non-scattering solutions are not essential. The dispersant may aggregate in surfactant-like micelles giving slightly hazy solutions in the liquid medium. The dispersant may be such that some proportion of the dispersant tends to form a colloid or micellar phase. It is preferred that the dispersant produces uniform and stable dispersions in the liquid medium used to make the polymer-encapsulated pigment particles which do not settle or separate on standing.

It is preferred that the dispersant is substantially soluble in the liquid medium used to make the polymer-encapsulated pigment particles, giving rise to clear or hazy solutions.

Preferred random polymeric dispersants tend to give clear compositions whilst less preferred polymeric dispersants with two or more segments tend to give rise to the aforementioned hazy compositions in liquid media.

Typically the dispersant adsorbs onto the pigment prior to crosslinking so as to form a relatively stable dispersion of the pigment particles. This dispersion is then crosslinked using the crosslinking agent to form the polymer-encapsulated pigment particles. This pre-adsorption and pre-stabilisation in particular distinguishes the present invention from coacervation approaches whereby a polymer or pre-polymer (which is not a dispersant) is mixed with a particulate solid, a liquid medium and the crosslinking agent and only during or after crosslinking does the resultant cross-linked polymer precipitate onto the particulate solid.

In embodiments where the dispersant has an acid value of at least 125mg KOH/g the crosslinking agent may have no oligomeric dispersing groups, but preferably the crosslinking agent has one or more oligomeric dispersing groups.

Crosslinking agents having one or more oligomeric dispersing group increase the stability of the polymer-encapsulated pigment particles in the ink.

The oligomeric dispersing group preferably is or comprises polyalkyleneoxide, more preferably a polyC₂₋₄-alkyleneoxide and especially a polyethyleneoxide. The polyalkyleneoxide groups provide steric stabilisation which improves the stability of the resulting encapsulated particulate solid.

Preferably the polyalkyeneoxide contains from 3 to 200, more preferably from 5 to 50 alkyleneoxide and especially from 5 to 20 alkyleneoxide repeat units.

The crosslinking agent preferably has at least two epoxy groups.

Preferred crosslinking agents having two epoxy groups and zero oligomeric dispersing groups are ethylene glycol diglycidyl ether, resorcinol diglycidyl ether, neopentyl glycol diglycidyl ether, 1,6-hexanediol diglycidyl ether, hydrogenated bisphenol A diglycidyl ether and polybutadiene diglycidyl ether.

Preferred crosslinking agents having two epoxy groups and one or more oligomeric dispersing groups are diethylene glycol diglycidyl ether, poly ethylene glycol diglycidyl ether, dipropylene glycol diglycidyl ether and poly propylene glycol diglycidyl ether.

Preferred crosslinking agents having three or more epoxy groups and zero oligomeric dispersing groups are sorbitol polyglycidyl ether, polyglycerol polyglycidyl ether, pentaerythritol polyglycidyl ether, diglycerol polyglycidyl ether, glycerol poly glycidyl ether and trimethylolpropane polygycidyl ether.

In one embodiment the epoxy crosslinking agent has zero oligomeric dispersing groups.

Examples of oxetane crosslinking agents include 1,4-bis[(3-ethyl-3-oxetanylmethoxymethyl)]benzene, 4,4'-bis[(3-ethyl-3-oxetanyl)methoxy]benzene, 1,4-bis[(3-ethy-3-oxetanyl)methoxyl -benzene, 1,2-bis[(3-ethyl-3-oxetanyl)-methoxy]benzene, 4,4-bis[(3-ethyl-3-oxetanyl)methoxy]biphenyl and 3,3',5,5'-tetramethyl-[4,4'-bis(3-ethyl-3-oxetanyl)methoxy]biphenyl.

Examples of carbodiimide crosslinking agents include crosslinker CX-300 from DSM NeoResins. Carbodiimide crosslinking agents having good solubility or dispersibility in water may also be prepared as described in US 6,124,398, synthetic Examples 1 to 93.

Examples of isocyanate crosslinking agents include isophorone diisocyanate, hexamethylene diisocyanate, toluene diisocyanate, methylene diphenyl diisocyanate, methylene dicyclohexyl diisocyante, 2-methyl-1,5-pentane diisocyanate, 2,2,4-trimethyl-1,6-hexane diisocyante and 1,12-dodecane diisocyanate, 1,11-diisocyanatoundecane, 1,12-diisocyanatododecane, 2,2,4- and 2,4,4-trimethyl-1,6-diisocyanatohexane, 1,3-diisocyanatocyclobutane, 4,4'-bis-(isocyanatocyclohexyl)-methane, hexamethylene diisocyanate, 1,2-bis-(isocyanatomethyl)-cyclobutane, 1,3-and 1,4-bis-(isocyanatomethyl)cyclohexane, hexahydro-2,4-and/or-2,6-diisocyanatoluene, 1-isocyanato-2-isocyanatomethyl cyclopentane, 1-isocyanato-3-isocyanatomethyl-3,5,5-trimethyl-cyclohexane, 2,4'-dicyclohexylmethane diisocyanate, and 1-isocyanato-4(3)-isocyanatomethyl-1-methyl cyclohexane, tetramethyl-1,3- and/or -1,4-xylylene diisocyanate, 1,3- and/or 1,4-phenylene diisocyanate, 2,4- and/or 2,6-toluene diisocyanate, 2,4- and/or 4,4'-diphenyl-methane diisocyanate, 1,5-diisocyanatonaphthalene, and p-xylylene diisocyanate. Suitable diisocyanates are also understood to include those containing modification groups such as biuret, uretdione, isocyanurate, allophanate and/or carbodiimide groups, as long as they contain two or more isocyanate groups. For isocyanates the liquid medium is preferably non-aqueous, although water can sometimes be tolerated with blocked isocyanates.

In a preferred embodiment, the polyisocyanate crosslinking agent contains three isocyanate groups. A convenient source of triisocyanate functional compounds is the known isocyanurate derivative of diisocyanates. Isocyanurate derivatives of diisocyanates can be made by reacting the diisocyanate together with a suitable trimerization catalyst. An isocyanurate derivative is produced that contains an isocyanurate core with pendant organic chains terminated by three isocyanate groups. Several isocyanurate derivatives of diisocyanates are commercially available. In one preferred embodiment, the isocyanurate used is the isocyanurate of isophorone diisocyanate. In another preferred embodiment, the isocyanaurate of hexamethylene diisocyanate is used.

Examples of N-methyol crosslinking agents include dimethoxydihydroxy ethylene urea; N,N-dimethylol ethyl carbamate; tetramethylol acetylene diurea; dimethylol urone; dimethylol ethylene urea; dimethylol propylene urea; dimethylol adipic amide; and mixtures comprising two or more thereof.

Examples of keteneimine crosslinking agents include compounds of formula Ph₂C=C=N-C₆H₄-N=C=CPh₂ wherein each Ph independently is an optionally substituted phenyl group.

Examples of hydrazide crosslinking agents include malonic dihydrazide, ethylmalonic dihydrazide, succinic dihydrazide, glutaric dihydrazide, adipic dihydrazide, isophthalic dihydrazide, oxalyl dihydrazide and pimelic dihydrazide.

Commercially available highly reactive oxazoline crosslinking agents are available from, for example, Nippon Shokubai under the Epocross® trade mark. These include the emulsion type (e.g. the Epocross K-2000 Series, such as K-2010E, K-2020E and K-2030E) and the water-soluble types (e.g. the Epocross WS Series, such as WS-300, WS-500 and WS-700).

Examples of aziridine crosslinking agents include ethylene imine-based polyaziridines (e.g. PZ-28 and PZ-33 available from PolyAziridine LLC, Medford, NJ); XC-103 tri-functional aziridines, XC-105 polyfunctional aziridines and Crosslinker XC-113 (available from Shanghai Zealchem Co., Ltd., China); polyfunctional aziridine liquid crosslinker SaC-100 (available from Shanghai UN Chemical Co.,Ltd, China); The aziridines crosslinking agents disclosed in WO 2009/120420; NeoCryl® CX-100 (available from DSM NeoResins); Xama® polyfunctional aziridines (available from Lubrizol); trimethylolpropane tris(beta-aziridino)propionate, neopentylglycol di(beta-aziridino)propionate, glyceryl tris(beta-aziridino)propionate, pentaerythrityltetra(beta-aziridino)propionate, 4,4'-isopropylidenediphenol di(beta-aziridino)propionate, 4,4'-methylenediphenol di(beta-aziridino); and mixtures comprising two or more thereof.

Particularly preferred crosslinking agents are polyethylene glycol diglycidyl ether (e.g. having an average molecular weight 526, obtainable from Aldrich) and/or trimethylolpropane polyglycidyl ether (e.g. Denacol® EX-321, obtainable from Nagase Chemtex, with weight per epoxy of 140).

In this first embodiment the preferred pigments in the self-dispersible pigment are carbon blacks, C.I. Pigment Red 122, C.I. Pigment Blue 15:3 and C.I. Pigment Yellow 74.

Component (b) the polymeric latex binder is typically water-dispersible particles or 'beads' which are capable of coalescing to form a film when the ink is heated above its minimum film-forming temperature ("MFFT").

In a first preferred embodiment component (b), the polymeric latex binder, comprises an acrylic latex binder.

In a second preferred embodiment component (b), the polymeric latex binder, comprises a polyurethane latex binder.

In a third preferred embodiment component (b), the polymeric latex binder, comprises a polyester latex binder.

In the above cases the ink may contain more than one latex binder. These latex binders may differ in their properties, such as particle size, glass transition temperature or molecular weight.

In another preferred embodiment component (b) the polymeric latex binder comprises mixtures of acrylic latex binder and polyurethane latex binder; acrylic latex binder and polyester latex binder; polyester latex binder and polyurethane latex binder; or acrylic latex binder, polyester latex binder and polyurethane latex binder. A combination of a polyurethane and an acrylic resin is especially preferred. This can be achieved by mixing at least one dispersion of a polyurethane with at least one acrylic emulsion. Alternatively a single urethane-acrylic dispersion can be made by polymerising acrylic monomers in the presence of a polyurethane dispersion. The individual components of the mixture of latex binders may differ in their properties, such as particle size, glass transition temperature or molecular weight.

Acrylic latex binders are derived from the copolymerisation of one or more ethylenically unsaturated compounds.

The glass transition temperature (Tg) of the acrylic latex binder may be controlled by polymerising at least one high Tg monomer (i.e. a monomer known to give acrylic polymers with a high Tg) with at least one low Tg monomer (i.e. a monomer known to give acrylic polymers with a low Tg), varying the nature and relative amounts of the monomers, and the molecular weight of the resultant polymer, so as to arrive at the required Tg.

It is also possible to control the Tg of the acrylic binder latex by mixing batches of latex with a different Tg.

Preferably the acrylic latex binder has a Tg of from 0°C -30°C.

The Tg is determined by Differential Scanning Calorimetry on the dried latex. The Tg is taken as being the midpoint value from a re-heat Differential Scanning Calorimetry scan (i.e. after an initial heat and cool).

Preferred high Tg monomers are styrene, alpha-methyl styrene, methyl methacrylate, isobornyl (meth)acrylate, with styrene and methyl methacrylate being especially preferred (including combinations of the two).

Preferred low Tg monomers are C₁₋₁₂alkyl acrylates and C₂₋₁₂alkyl methacrylates, such as, for example, methyl acrylate, ethyl acrylate, ethyl methacrylate, propyl acrylate, propyl methacrylate, butyl acrylate, butyl methacrylate, 2-ethylhexyl acrylate, 2-ethylhexyl methacrylate, octyl acrylate, octyl methacrylate, dodecyl acrylate, dodecyl methacrylate and combinations comprising two or more thereof; and (meth)acrylates with PEG groups Examples of ethylenically unsaturated compounds having a poly(alkylene glycol) water-dispersing group include polyethylene glycol monomethacrylate, polypropylene glycol monoacrylate, polypropylene glycol monomethacrylate, poly(ethylene glycol) diacrylate, poly(ethylene glycol) divinyl ether, poly(ethylene glycol) diallyl ether, poly(ethylene glycol-co-propylene glycol) diacrylate, poly(ethylene glycol)-block-poly(propylene glycol)-block-poly(ethylene glycol) diacrylate, a diacrylate of a copolymer of polyethylene glycol and other building blocks e.g. polyamide, polycarbonate, polyester, polyimide, polysulfone, and combinations thereof, and compounds of the following structure, wherein w is 1 to 100 and R¹¹ is H or an alkyl group of C₁-C₁₀ (i.e. comprising 1 to 10 carbon atoms) or an aromatic group or an alkoxy group or an ester group, and R¹² is H or a methyl group:

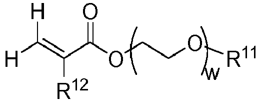

Preferably the acrylic latex binder also comprises a monomer having a water-dispersing group (e.g. an acidic, poly(alkylene glycol), hydroxy, amino or cationic group).

The acidic groups include, for example, sulfo, carboxy and/or phosphato groups. The preferred salts for acidic groups are lithium, ammonium, sodium and potassium salts and mixtures comprising two or more thereof. The cationic groups include quaternary ammonium groups. These groups will be often be partially or wholly in salt form. The preferred salts for cationic groups are halide and simple organic acid salts, e.g. chloride, acetate, propionate and/or lactate.

Examples of ethylenically unsaturated compounds having an acidic water-dispersing group include (meth)acrylic acid, beta carboxy ethyl (meth)acrylate, maleic acid, vinyl sulfonic acid, phosphonomethylated acrylamide, (2-carboxyethyl)acrylamide, 2-(meth)acrylamido-2-methylpropanesulfonic acid and (meth)acryloyloxyethyl succinate.

Examples of ethylenically unsaturated compounds having a cationic water-dispersing group include (3-acrylamidopropyl)trimethylammonium chloride, 3-methacrylamidopropyl trimethyl ammonium chloride, (ar-vinylbenzyl) trimethylammonium chloride, (2-(methacryloyloxy)ethyl)trimethylammonium chloride, [3-(methacryloylamino)propyl] trimethyl ammonium chloride, (2-acrylamido-2-methylpropyl) trimethylammonium chloride, 3-acrylamido-3-methylbutyl trimethyl ammonium chloride, acryloylamino-2-hydroxypropyl trimethyl ammonium chloride and N-(2-aminoethyl)acrylamide trimethyl ammonium chloride.

Examples of ethylenically unsaturated compounds having a hydroxy group include: 2-hydroxyethyl acrylate; 2-hydroxyethyl methacrylate; hydroxypropyl acrylates; and hydroxypropyl methacrylates; hydroxybutyl acrylates; hydroxybutyl methacrylates; poly(ethylene glycol) mono acrylates; poly(ethylene glycol) mono methacrylates; poly (propylene glycol) mono acrylates; and poly (propylene glycol) mono methacrylates. Especially preferred are 2-hydroxyethyl acrylate and 2-hydroxyethyl methacrylate.

It is preferred that the acrylic latex has an acid value of 0-30, more preferably 0-20 and most preferably <5 mgKOH/g.

Cross-linked acrylic latex binders may be prepared by incorporating in the latex poly-functional compounds (i.e. monomers having two or more ethylenically unsaturated groups).

Examples of suitable polyfunctional compounds include Bisphenol A ethoxylate diacrylate, neopentyl glycol ethoxylate diacrylate, propanediol ethoxylate diacrylate, butanediol ethoxylate diacrylate, hexanediol ethoxylate diacrylate, ethylene glycol di(meth)acrylate, diethylene glycol di(meth)acrylate, divinylbenzene, glycerol ethoxylate triacrylate, trimethylolpropane ethoxylate triacrylate, pentaerythrytol ethoxylate tetraacrylate, ditrimethylolpropane ethoxylate tetraacrylate, dipentaerythrytol ethoxylate hexaacrylate and combinations comprising two or more thereof.

Typically the latexes are prepared in the presence of a surfactant. However when the latex is derived from ethylenically unsaturated compounds having a water-dispersing group, less surfactant may be required and in some cases no surfactant is necessary. The content of surfactant and ethylenically unsaturated compounds having a water-dispersing group, when present, is preferably sufficiently high to ensure the polymer forms an emulsion in the ink and not so high as to form a solution in the ink.

Preferred acrylic latex binders comprise the following combinations of monomers:
- styrene/n-butyl acrylate/2-hydroxyethyl methacrylate
- styrene/n-butyl acrylate/acid-functional monomer
- styrene/methyl methacrylate/n-butylacrylate/2-hydroxyethyl methacrylate
- styrene/methyl methacrylate/n-butylacrylate/acid-functional monomer
- methyl methacrylate/n-butyl acrylate/2-hydroxyethyl methacrylate
- methyl methacrylate/n-butyl acrylate/ acid-functional monomer

Preferably the acrylic latex binders are prepared by emulsion polymerisation.

Methods for performing emulsion polymerisation are not particularly limited. In some embodiments of the present invention, the ethylenically unsaturated compounds may be added in one or more batches or fed continuously to a solution of surfactant and an initiator in water. The polymerisation is then preferably carried out by heating. The polymerisation is preferably carried out under a nitrogen atmosphere. Preferably, to control the reaction, the mixture of ethylenically unsaturated compounds is fed continuously, more preferably under starve-feed conditions. Preferably, a seed polymerisation is carried out first using a minor amount of the mixture of ethylenically unsaturated compounds (e.g. up to 10%) and once this is completed, the remainder of the mixture of ethylenically unsaturated compounds is preferably fed continuously, more preferably under starve-feed conditions. All or some of the surfactant may be present in the solution at the start of the polymerisation. Where some of the surfactant is present to begin with the remainder of the surfactant may be added (e.g. fed continuously) as the polymerisation progresses. The solution may contain all or some of the initiator. Preferably, at least a portion of the initiator is present in the solution to begin with. Where not all of the initiator is present to begin with, the remainder may be added in one or more batches or fed continuously (preferably fed continuously) to the solution as the polymerisation progresses. A solution of the initiator with surfactant in water may be used for this purpose and preferably is fed continuously. Preferably, the initiator is fed continuously.

The surfactant used in the emulsion polymerisation may be anionic, cationic, zwitterionic or non-ionic. Mixtures of different surfactant classes of surfactant may be used. Preferably the surfactant is an anionic surfactant optionally mixed with a non-ionic surfactant.

Suitable ionic surfactants include known anionic and cationic surfactants. Examples of suitable anionic surfactants are: alkyl benzene sulfonates (e.g. sodium dodecylbenzene sulfonate); alkyl sulfates; alkyl ether sulfates; sulfosuccinates; phosphate esters; fatty acid carboxylates, including alkyl carboxylates; and alkyl or aryl alkoxylated carboxylates, which include, for example, alkyl ethoxylated carboxylates, alkyl propoxylated carboxylates and alkyl ethoxylated/propoxylated carboxylates.

Examples of suitable cationic surfactants are: quaternary ammonium salts; benzalkonium chloride; ethoxylated amines.

Examples of non-ionic surfactants are: alkyl ethoxylates; alkyl propoxylates; alkyl aryl ethoxylates; alkyl aryl propoxylates; and ethylene oxide/propylene oxide copolymers. In a preferred embodiment, the ionic surfactant comprises an anionic surfactant, especially an anionic surfactant having a sulfonate, sulfate, phosphate and/or carboxylate group (e.g. a sulfo or carboxy functional anionic surfactant). Anionic surfactants having a sulfonate group are the preferred type of surfactant. Examples of ionic surfactant comprising a carboxylate group include fatty acid carboxylates, e.g. salts of lauric acid, myristic acid, palmitic acid, stearic acid andoleic acid. Most preferred still are the alkyl alkoxylated carboxylates, such as, for example, alkyl ethoxylated carboxylates, alkyl propoxylated carboxylates and alkyl ethoxylated/propoxylated carboxylates, especially wherein the alkyl is C₈₋₁₄₋alkyl. Suitable alkyl alkoxylated carboxylates are commercially available, such as in the Akypo® range of surfactants from Kao Corporation and the Marlowet® range of surfactants from Sasol. Examples of ionic surfactants comprising a sulfonate group include sodium dioctyl sulfosuccinate, sodium di-sec-butyl naphthalene sulfonate, disodium dodecyl diphenyl ether sulfonate, disodium n-octadecyl sulfosuccinate and especially sodium dodecyl benzene sulfonate. Examples of ionic surfactants comprising a sulfonate group and a carboxylate group include disodium laureth-3 sulfosuccinate. Examples of ionic surfactants comprising a phosphate group include alkyl phosphate mono or di-esters such as ethoxylated dodecyl alcohol phosphate ester. The aforementioned ionic surfactants are usually in salt form, e.g. the form of a sodium, potassium, lithium or ammonium salt or a mixed salt comprising two or more of the foregoing.

Polymerisable surfactants, i.e. those capable of copolymerising with the monomers during polymerisation, can also be used. Examples include the Maxemul® range from Croda and the Hitenol® range from Montello.

The molecular weight of the acrylic latex binders can be controlled by methods known in the art, for example, by use of a chain transfer agent (e.g. a mercaptan) and/or by control of initiator concentration in the case of emulsion polymerisation, and/or by heating time. Preferably the acrylic latex binders have a molecular weight of greater than 20,000 Daltons and more preferably of greater than 100,000 Daltons. It is especially preferred that the molecular weight of the acrylic latex binder is in the range of from 200,000 to 500,000 Daltons.

The molecular weight of the acrylic latex binder may be determined by Gel Permeation Chromatography against polystyrene standards using an Agilent HP1100 instrument with THF as eluent and PL Mixed Gel C columns.

Suitable initiators for emulsion polymerisation include persulfates, e.g. sodium persulfate, potassium persulfate or ammonium persulfate. Other suitable initiators are known in the art, e.g. azo and peroxide initiators. As the initiator, combinations of initiators may be used or they be used singly.

Chain transfer agents (CTAs) for emulsion polymerisation may be contained in the monomer mixture or added separately to the solution. Suitable CTAs include mercaptans (thiols), such as alkyl mercaptans and thioglycolates, and halocarbons. Examples of alkyl mercaptans include dodecyl mercaptan. Examples of thioglycolates include iso-octyl thioglycolate. Examples of halocarbons include carbon tetrachloride and carbon tetrabromide.

As an alternative to preparing the acrylic latex binder by emulsion polymerisation a preformed acrylic polymer with the required properties can be dispersed by solution-dispersion, phase-inversion or melt dispersion processes. The dispersion can be stabilised either by a surfactant, or by polar groups attached to the polymer (carboxy, sulfo, phosphate etc). Suitable acrylic polymers include those compositions described above for emulsion polymerisation.

The acrylic latex binder may be monomodal, preferably with an average particle size of below 1000nm, more preferably below 200nm and especially below 150nm. Preferably, the average particle size of the latex binder is at least 20nm, more preferably at least 50nm. Thus, the latex binder may preferably have an average particle size in the range of from 20 to 200nm and more preferably in the range of from 50 to 150nm. The average particle size of the latex binders may be measured using photon correlation spectroscopy.

The acrylic latex binder may also show a bimodal particle size distribution. This may be achieved either by mixing two or more latexes of different particle size, or by generating the bimodal distribution directly, for example by two-stage polymerisation. Where a bimodal particle size distribution is used it is preferred that the lower particle size peak is in the range 20-80 nm, and the higher particle size peak is in the range 100-500 nm. It is further preferred that the ratio of the two particle sizes is at least 2, more preferably at least 3 and most preferably at least 5.

When the latex binder is a polyurethane latex binder then the preferred isocyanate component is of Formula (I):

O=C=N-R-N=C=O Formula (I)

wherein R is an alkylene group, a cycloalkylene group (preferably a 5 to 7 membered cycloalkylene group), an arylene group, (preferably a phenylene group or a naphthylene group) an alkylene-bisarylene group or an arylene-bisalkylene group.

Preferred diisocyanates include 2,4- and 2,6-toluene diisocyanate, diphenyl methane-4,4'-diisocyanate, polymethylene-diphenylene isocyanate, bitoluene diisocyanate, dianisidine diisocyanate, 1,5-naphthalene diisocyanate, 1,6-hexamethylene diisocyanate, bis(isocyanate cyclohexyl)methane diisocyanate, isophorone diisocyanate, 2,2,4-trimethyl hexane diisocyanate, xylene diisocyanate and tetramethylxylene diisocyanate.

Preferred polyols include polyalkylene ether glycols, alkyd resins, polyesters, polyesteramides, hydrocarbons and polycarbonates having two or more hydroxy groups.

Examples of polyether diols are polyethylene glycol, polypropylene glycol and poly(tetramethylene ether) diol.

Polyester diols include those made by polymerisation of a lactone, e.g. caprolactone, and those made by polymerisation of a multifunctional alcohol with a multifunctional acid or derivative (such as an ester or an anhydride). The acid derivative may be aliphatic, cycloaliphatic or aromatic. Examples include succinic acid, maleic acid or anhydride, fumaric acid, adipic acid, dimer acids, phthalic acid or anhydride, isophthalic acid and terephthalic acid. Examples of multifunctional alcohols include ethylene glycol, propane-1,2-diol, 1,4-butanediol, 1,6-hexanediol, neopentyl glycol, cyclohexanedimethanol and ethoxylated or propoxylated bisphenol A. Tri-functional or higher functional alcohols may also be added, for example glycerol, trimethylopropane and pentaerythritol, and ethoxylated or propoxylated derivatives of these materials.

Polycarbonate diols can be from reactions of, e.g. phosgene, dialkyl carbonates, diaryl carbonates or cyclic carbonates with diols such as 1,3-propanediol, 1,4-propanediol or 1,6-hexanediol.

A preferred class of polymeric diol are polyester diols. In this case the polyurethane dispersion is made by reaction of the polyester diol with a di-isocyanate, optionally a water-dispersing diol such as dimethylopropionic acid, and optionally with chain extension (e.g. with a diamine).

Commercially available polyurethane dispersions may be used. Examples include W835/177 and W835/397 from Incorez, and Joncryl® U4190 from BASF.

A polyurethane pre-polymer may be prepared by mixing the polyol and isocyanate with stirring under nitrogen, typically at a temperature of 25 to 110°C. The reaction may be advantageously carried out in the presence of a solvent, if desired, together with a catalyst. Useful solvents for the reaction include ketones and esters, aliphatic hydrocarbons (e.g. heptane or octane) and alicyclic hydrocarbons (e.g. methyl cyclohexane). However it is preferable to carry out the polymerisation in the absence of solvent. Useful catalysts include tertiary amines, acids and organic metallic compounds (e.g. triethylamine, stannous chloride or din-butyl-tin dilaurate).

After production the pre-polymer may be emulsified and then chain extended in the presence of a chain extending agent to thereby prepare the polurethane latex binder. Useful chain extending agents contain at least two functional groups having an active hydrogen atom, typical examples of which include a hydrazine, primary and secondary amines, aminoalcohols, amino acids, oxyacids, diols, and mixtures comprising two or more thereof. Preferred chain extending agents include water, primary diamines and secondary diamines. Examples of suitable diamines include 1,4-cyclohexene-bis(methylamine), ethylenediamine and diethylenetriamine.

The number of moles of chain-extending agent used is typically equal to or about equal to the number of moles of isocyanate pre-polymer.

The emulsification of the pre-polymer may be performed in the presence of a surfactant. Where the pre-polymer contains an acidic or cationic group, the addition of surfactant may be unnecessary.

It is also possible to make the polyurethane dispersion by taking a solution of a polyurethane in an organic solvent and dispersing it in water, optionally with a surfactant, followed by removal of the organic solvent by distillation. The polyurethane may be in a water-miscible solvent, such as methyl ethyl ketone (MEK), acetone or isopropanol, or may be in a water-miscible solvent such as toluene, ethyl acetate, dichloromethane etc. If the polyurethane contains stabilising groups, such as carboxylic acid salts, then a surfactant may not be necessary. If a water immiscible solvent is used it is generally preferred to use high-shear mixing to create an emulsion of the polyurethane solution in water. If a water miscible solvent is used normal stirring may be adequate. The solvent is removed by distillation, preferably under vacuum, and it is preferred that the solvent level in the dispersion is reduced to below 2000 ppm, more preferably below 1000 ppm, and most preferably below 500 ppm. Suitable polyurethane resin solutions for making dispersions by this process include Vylon UR-1700, UR-4410 and UR-3210 from Toyobo.

Polyurethane dispersions are typically made by:
(i) reaction of a polymeric diol (polyol), and optionally other components capable of reacting with isocyanate groups, with a di-isocyanate to create a pre-polymer, followed by;
(ii) dispersion into water optionally with chain-extension of the prepolymer by reaction with water and/or a chain-extender present in the water phase;

The dispersion may be stabilised by monomers present in the polyurethane, for example ionic groups or non-ionic groups, or by added surfactants. An example of stabilisation through inclusion of ionic groups is by use of dimethylolpropionic acid (DMPA) as a monomer along with the polymeric diol. Examples of non-ionic stabilising groups are poly(alkylene oxide) groups such as polyethyleneglycol and polypropyleneglycol.

The Tg of the polyurethane latex binder may be controlled through the selection of the polyol, the di-isocyanate and the chain extender. It is also possible to control the Tg of the polyurethane binder latex by mixing batches of latex with a different Tg.

Preferably the polyurethane latex binder has a Tg in the range of from - 30°C to 0°C.

The weight average molecular weight of the polyurethane is preferably >20,000, more preferably >50,000 and most preferably >100,000.

The polyurethane latex binder preferably has an average particle size of below 1000nm, more preferably below 200nm and especially below 150nm. Preferably, the average particle size of the latex binder is at least 20nm, more preferably at least 50nm. Thus, the latex binder may preferably have an average particle size in the range of from 20 to 200nm and more preferably in the range of from 50 to 150nm. The average particle size of the latex binders may be measured using photon correlation spectroscopy.

When the latex binder is a polyester it may be prepared using any polymerisation procedures known for polyester synthesis. Thus, it is well known that polyesters contain carbonyloxy (i.e. -C(-O)-O-) linking groups and may be prepared by a condensation polymerisation process in which an acid component (including ester-forming derivatives thereof) is reacted with a hydroxyl component. The acid component may be selected from one or more polybasic carboxylic acids, e.g. di- and tri-carboxylic acids or ester-forming derivatives thereof, for example acid halides, anhydrides or esters. The hydroxyl component may be one or more polyhydric alcohols or phenols (polyols), for example, diols, triols, etc. (It is to be understood, however, that the polyester may contain, if desired, a proportion of carbonylamino linking groups -C(-O)-NH- (i.e. amide linking groups) by including an appropriate amino functional reactant as part of the "hydroxyl component". The reaction to form a polyester may be conducted in one or more stages. It is also possible to introduce in-chain unsaturation into the polyester by, for example, employing as part of the acid component an olefinically unsaturated dicarboxylic acid or anhydride.

Preferred polybasic carboxylic acids which can be used to form the polyester have two or three carboxylic acid groups. For example, one can use C4 to C20 aliphatic, alicyclic and aromatic compounds having two or more carboxy groups and their ester forming derivatives (e.g. esters, anhydrides and acid chlorides), and dimer acids such as C36 dimer acids. Specific examples include adipic acid, fumaric acid, maleic acid, succinic acid, itaconic acid, sebacic acid, nonanedioic acid, decanedioic acid, 1,4-cyclohexanedicarboxylic acid, 1,3-cyclohexanedicarboxylic acid, 1,2-cyclohexanedicarboxylic acid, terephthalic acid, isophthalic acid, phthalic acid and tetrahydrophthalic acid and their acid chlorides. Anhydrides include succinic, maleic, phthalic and hexahydrophthalic anhydrides.

Preferred polyols which can be used to form the polyester include those having from 2 to 6, more preferably 2 to 4 and especially 2 hydroxyl groups per molecule. Suitable polyols having two hydroxy groups per molecule include diols such as 1,2-ethanediol, 1,3-propanediol, 1,4-butanediol, 1,6-hexanediol, 2,2-dimethyl-1,3-propanediol (neopentyl glycol), the 1,2-, 1,3- and 1,4-cyclohexanediols and the corresponding cyclohexane dimethanols, diethylene glycol, dipropylene glycol, and diols such as alkoxylated bisphenol A products, e.g. ethoxylated or propoxylated bisphenol A. Suitable polyols having three hydroxy groups per molecule include triols such as trimethylolpropane (1,1,1-tris (hydroxymethyl)propane). Suitable polyols having four or more hydroxy groups per molecule include pentaerythritol (2,2-bis(hydroxymethyl)-1,3-propanediol) and sorbitol (1,2,3,4,5,6-hexahydroxyhexane).

The molecular weight of the polyester latex binders can be controlled by methods known in the art, for example, by reaction time or the ratio of acid (or ester) to hydroxyl groups. Preferably the polyester latex binders have a molecular weight of 5,000 to 100,000 Daltons and more preferably of 5,000 to 50,000 Daltons. It is especially preferred that the molecular weight of the polyester latex binder is in the range of from 8,000 to 40,000 Daltons.

The molecular weight of the acrylic latex binder may be determined by Gel Permeation Chromatography against polystyrene standards using an Agilent HP1100 instrument with THF as eluent and PL Mixed Gel C columns

The Tg of the polyester latex binder may be controlled by polymerising at least one high Tg monomer (i.e. a monomer known to give polyester polymers with a high Tg) with at least one low Tg monomer (i.e. a monomer known to give polyester polymers with a low Tg), varying the nature and relative amounts of the monomers, and the molecular weight of the resultant polymer, so as to arrive at the required Tg.

It is also possible to control the Tg of the polyester binder latex by mixing batches of latex with a different Tg.

Preferred high Tg monomers are terephthalic acid, isophthalic acid, 1,2-ethanediol and alkoxylated bisphenol A products, e.g. ethoxylated or propoxylated bisphenol A.

Preferred low Tg monomers are longer chain dicarboxylic acids such as C36 dimer acids, or longer chain diols such as 1,6 hexanediol.

Preferably the polyester latex binder has a Tg of from 0°C -30°C

The polyester latex may be prepared by, for example, solution-dispersion, phase-inversion or melt emulsification processes. The polyester latex may be stabilised in the aqueous medium either by a surfactant, or by salts of acid groups present in the polymer or by a combination of both. The acid groups present in the polymer may be carboxylic acid groups, sulfonate groups etc. Carboxylic acid groups may be present from chain ends due to dicarboxylic acids being used as monomers; they may be formed by reaction of hydroxyl chain ends with anhydrides (e.g. trimellitc anhydride or phthalic anhydride); or they may be present due to the incorporation of monomers such as dimethylolpropionic acid. Sulfonate groups may be present from the use of monomers such as sodium sulfo-isophthalic acid or its esters in the polycondensation reaction.

Preferably, the polyester resin is dispersed in an aqueous medium by: mixing at least a polyester resin, an organic solvent, water, optionally an ionic surfactant and optionally a base; and removing the organic solvent from the resultant mixture to form an aqueous dispersion of polyester resin particles. More preferably, the polyester resin is dispersed in the aqueous medium by providing (e.g. dissolving) the polyester resin in an organic solvent to form an organic phase; preparing an aqueous phase comprising water, optionally an ionic surfactant and optionally a base; mixing the organic phase and the aqueous phase to disperse droplets of the organic phase in the aqueous phase; and removing the organic solvent to leave an aqueous dispersion of polyester resin particles. Mixing, e.g. of the organic phase and the aqueous phase, may be performed by any suitable method of mixing dispersions. The mixing may be performed using a low shear energy step (e.g. using a low shear stirring means) and/or a high shear energy step (e.g. using a rotor-stator type mixer).

The organic solvent may be water-immiscible or water-miscible. Any suitable known water-immiscible organic solvent may be used for dissolving the polyester resin. Suitable water-immiscible organic solvents include: alkyl acetates (e.g. ethyl acetate), hydrocarbons (e.g. hexane, heptane, cyclohexane, toluene, xylene etc.), halogenated hydrocarbons (e.g. methylene chloride, monochlorobenzene, dichlorobenzene etc.) and other known water-immiscible organic solvents. Preferred solvents are methylene chloride (i.e. dichloromethane) and ethyl acetate and mixtures thereof. Two or more solvents (i.e. co-solvents) may be used.

Suitable examples of water-miscible solvents include alcohols (e.g. methanol, ethanol, propanol, isopropanol (IPA), butanol etc.), ketones (e.g. acetone, methyl ethyl ketone (MEK) etc.), glycols (e.g. ethylene glycol, propylene glycol etc.), alkyl ethers of ethylene glycol (e.g. methyl cellosolve®, ethyl cellosolve®, butyl cellosolve® etc.), alkyl ethers of diethylene glycol (e.g. ethyl carbitol®, butyl carbitol® etc.), alkyl ethers of propylene glycol and ethers (dioxane, tetrahydrofuran etc.).

The optional base may be any suitable base for neutralising acid groups, for example, metal salts (such as sodium hydroxide, potassium hydroxide), ammonium hydroxide and amines (e.g. organic amines).

The solvent is removed by distillation, preferably under vacuum, and it is preferred that the solvent level in the dispersion is reduced to below 2000 ppm, more preferably below 1000 ppm, and most preferably below 500 ppm.

Especially where the polyester contains sulfonate groups, e.g. from incorporation of sodium sulfo-isophthalic acid or its esters, it may be possible to prepare a dispersion by simply heating the resin in water. An example of such a resin is Skybon® EW-210 from SK Chemicals.

The polyester latex binder preferably has an average particle size of below 1000nm, more preferably below 200nm and especially below 150nm. Preferably, the average particle size of the latex binder is at least 10nm, more preferably at least 20nm, most preferably at least 50nm. Thus, the latex binder may preferably have an average particle size in the range of from 20 to 200nm and more preferably in the range of from 50 to 150nm. The average particle size of the latex binders may be measured using photon correlation spectroscopy.

The latex binder once formed is preferably screened to remove oversized particles prior to use, for example through a filter having an average pore size below 3µm, preferably 0.3 to 2µm, especially 0.5 to 1.5µm. The latex binder may be screened before, during or after it is mixed with other components to form the ink.

The polyester latex binder optionally has an acid value of 0 to 50mg KOH/g, especially 0 to 40mg KOH/g, more especially up to 30mg KOH/g. Where carboxylic acid salts present in the polyester polymer are used to stabilise the dispersion the acid value may preferably be in the range 5-30 mg KOH/g. Where sulfonate salts present in the polyester polymer, or surfactants, are used to stabilise the dispersion the acid value may be <5 mg KOH/g.

Preferably component (b) is a polyurethane latex binder.

Component (c) may comprise any suitable polar organic solvent with a solubility parameter greater than 27.5 at 25°C.

Preferably component (c) comprises a protic polar organic solvent.

Suitable solvents include glycerol, 2-pyrrolidone, ethylene glycol, propylene glycol and diethylene glycol.

Preferably component (c) comprises 1 to 3 solvents selected from the list consisting of; glycerol, 2-pyrrolidone, ethylene glycol and diethylene glycol. More preferably component (c) comprises 2 or 3 solvents selected from the list consisting of; glycerol, 2-pyrrolidone, ethylene glycol and diethylene glycol. It is especially preferred that component (c) comprises 3 solvents selected from the list consisting of; glycerol, 2-pyrrolidone, ethylene glycol and diethylene glycol.

The solubility parameter is the standard Hildebrand solubility parameter which is expressed in mega Pascals. Values for the Hildebrand solubility parameters of solvents may be found in Barton, Handbook of Solubility Parameters, CRC Press, 1983.

Any acetylenic surfactant may be used as component (d). However, 2,4,7,9-tetramethyl-5-decyne-4,7-diol and ethylene oxide condensates thereof are preferred. These compounds are available as the Surfynol® range of surfactants from Air Products.

Mixtures containing different surfactants may be used.

Component (d) is preferably present in the composition in an amount of 0.001 to 2.5 parts, more preferably 0.01 to 2 parts, especially 0.05 to 1.5 parts, more especially 0.1 to 1.2 parts and particularly 0.5 to 1.0 parts.

The surfactant is a key component in the inks of the present invention. Correct choice of both the surfactant and its concentration in a particular ink is essential in the ink-jetting effectively and in not wetting the face-plate of the print-head.

It is desirable that the ink is designed so that it does not wet print-head face-plates that are not treated with a "non-wetting coating". These face-plates may show a contact angle with water of less than 90°, or less than 80°. Face-plates that are specifically designed to be non-wetting may have a contact angle with water of more than 90°C, sometimes more than 95°, and sometimes even more than 100°.

To achieve these properties it is desirable that the ink shows a dynamic surface tension range, i.e. that its surface tension is dependent on the surface age. The surface tension of a newly created surface is high, but drops as surfactant, or other surface active species, migrate to the surface. The dynamic surface tension range may be determined by measurements in a bubble tensiometer. This measures the surface tension as a function of surface age or bubble frequency. It is preferred that the surface tension measured at 10 ms (γ(10)) is >35 dynes/cm, and the surface tension measured at 1,000 ms (γ(1000)) is in the range 20 to 40 dynes/cm, with γ(10) > γ(1000). Alternatively the equilibrium surface tension of the ink can be compared with that of the equivalent ink made without inclusion of the surfactant(s). It is preferred that the equilibrium surface tension without surfactant is at least 10 dynes/cm higher than that where the surfactant(s) is (or are) present.

For component (e) any biocide (or mixture of biocides) which is stable in the ink may be used. It is particularly preferred that the biocide comprises 1,2-benzisothazolin-3-one which is available as a 20% active solution from Lonza as Proxel® GXL and Bioban®, DXN (2,6-dimethyl-1,3-dioxan-4-yl acetate), from Dow Chemical Company.

The viscosity modifier, component (f), is preferably selected from the group consisting of polyethers, (such as polyethylene glycol and poly(ethylene oxide)), cellulose polymers such as hydroxyethyl cellulose, hydroxypropyl cellulose and carboxymethyl cellulose, water-soluble acrylics, water-soluble polyesters, water-soluble polyurethanes, homopolymers of 2-ethyl-oxazoline (e.g. poly-2-ethyl-2-oxazoline), poly(vinyl alcohol) and poly(vinylpyrrolidones) and mixtures thereof.

Component (f) is preferably poly(ethylene glycol) or poly(ethylene oxide), an acrylic polymer or a polyurethane, including a hydrophobically modified polyurethane. More preferably component (f) is polyethylene glycol especially polyethylene glycol 20,000.

Component (f) is preferably present in the composition in an amount of from 0 to 10 parts and more preferably in an amount of from 2 to 8 parts.

Other polar solvents with a solubility parameter less than 27.5 at 25°C may optionally be present in the ink. Preferably the inks of the present invention comprise less than 3 parts, more preferably less than 2 parts, especially less than 1 part and more especially are free from solvents with a solubility parameter less than 27.5 at 25°C. Thus, preferably component (g) is 0.

In one embodiment of the invention a first latex (preferably acrylic) binder is cross-linked during or after film formation either by reaction with another latex (preferably acrylic) binder, or by reaction with a cross-linking agent. In the latter case a cross-linking agent may be added to the ink (component (h)). Any suitable cross-linking agents may be used. Examples of preferred cross-linking agents are as described above for component (a). The cross-linking agent may react with functionality attached to the polymer, for example carboxylic acid groups or ketones. Reactive ketone groups may be incorporated into the polymer by use of monomers such as diacetone acrylamide, or 2-(methacryloyloxy)ethyl acetoacetate. Polymers incorporating these monomers may be cross-linked by cross-linking agents such as dihydrazides (e.g. adipic acid dihydrazide) or diamines.

The ink preferably has a MFFT below 65°C, especially below 60°C.

The MFFT is the lowest temperature at which components of the ink components will coalesce to form a film, e.g. during ink drying.

Equipment for measuring MFFT is commercially available, for example the Minimum Film Forming Temperature Bar is available from Rhopoint Instruments (the "MFFT Bar 90"). The MFFT Bar 90 comprises a temperature bar having a nickel-plated copper platen with an electronically imposed temperature gradient. Ten equally spaced sensors beneath the surface provide instantaneous temperature measurement along the bar. The desired temperature program is selected and the instrument allowed to reach thermal equilibrium. Tracks of wet test ink may be applied using a cube applicator, or spreader. Once the ink has dried the device shows the MFFT. If for any reason the above mentioned commercially available equipment does not work on the ink (e.g. due to a low latex content and/or the ink's colour), one may instead place a small amount of the ink in a dish and heat the dish containing the ink at the desired assessment temperature (e.g. 70°C) for 24 hours and then rub the surface with a gloved finger to assess whether a film has formed. If a film has formed there will be little or no ink transfer to the gloved finger, whereas if a film has not formed there will be a significant transfer of ink to the gloved finger or the dried ink will crack.

The desired MFFT may be achieved by selecting appropriate combinations of polymer latex and organic solvents. If the MFFT of an ink is too high, the amount of coalescing solvent may be increased and/or a polymer latex of lower Tg may be used in order to bring the ink MFFT into the desired range. Therefore at the ink design stage one may decide whether to include more or less coalescing solvent and higher or lower Tg polymer latex, depending on the desired MFFT.

In one embodiment, the ink has a viscosity of less than 45mPa.s, more preferably less than 40mPa.s, especially less than 37mPa.s, more especially of less than 25mPa.s and particularly less than 20 mPa·s when measured at 35°C using a Brookfield spindle 18 at 60 rpm. In one embodiment the viscosity is in a range of from 8 to 20 mPa·s when measured at 35°C using a Brookfield spindle 18 at 60 rpm.

The ink preferably has a surface tension from 20 to 65 dynes/cm, more preferably from 20 to 50 dynes/cm, especially 20 to 40 dynes/cm, when measured at 25°C using a Kibron AquaPi.

Preferably, the ink composition has been filtered through a filter having a mean pore size of less than 10 microns, more preferably less than 5 microns and especially less than 1 micron.

Preferably the ink has a pH in the range of from 7.5 to 9.5. The pH may be adjusted by means of a suitable buffer.

In addition to the above mentioned components, the ink composition may optionally comprise one or more ink additives. Preferred additives suitable for ink-jet printing inks are anti-kogation agents, rheology modifiers, corrosion inhibitors and chelating agents. Preferably, the total amount of all such additives is no more than 10 parts by weight. These additives are added to and comprise part of component (i), the water added to the ink.

In a preferred embodiment the ink comprises:
(1) 0.5 to 5 parts of a self-dispersible pigment;
(2) 2 to 15 parts of a polymeric latex binder with a glass transition temperature in the range of from 0°C to -60°C;
(3) 1 to 10 parts of a first protic polar organic solvent with a solubility parameter at 25°C greater than 27.5;
(4) 1 to 10 parts of a second protic polar organic solvent with a solubility parameter at 25°C greater than 27.5;
(5) 0 to 10 parts of a third polar protic organic solvent with a solubility parameter at 25°C greater than 27.5;
(6) 0.2 to 2 parts of an acetylenic surfactant;
(7) 0.001 to 2 parts of biocide;
(8) 0 to 10 parts of a viscosity modifier;
(9) the balance to 100 parts water; and
provided that the total amount of protic polar organic solvent is in the range of 5 to 15 parts and the ratio of latex binder to total protic polar organic solvent is in the range of from 1:3 to 3:1

In this preferred embodiment component (5) is preferable present in from 1 to 10 parts.

Also in this preferred embodiment the ratio of latex binder to total protic polar organic solvent is in the range of from 1:2 to 2:1

Typically one will select the ink and the substrate such that the ink has an MFFT below the temperature at which the substrate would deform, distort or melt. In this way, the ink can form a film on the substrate at a temperature which does not damage the substrate.

Although the present invention is of particular value for printing substrates which are non-absorbent and/or temperature-sensitive, it may also be used to print substrates which are absorbent and/or not temperature-sensitive. For such substrates the present inks and processes offer the advantage of providing prints having good rub-fastness properties at lower temperatures than used in prior processes, thereby reducing manufacturing costs.

Examples of non-absorbent substrates include polyester, polyurethane, bakelite, poly vinyl chloride, nylon, polymethyl methacrylate, polyethylene terephthalate, polypropylene, acrylonitrile-butadiene-styrene, polycarbonate, a blend of about 50% polycarbonate and about 50% acrylonitrile-butadiene-styrene, polybutylene terephthalate, rubber, glass, ceramic and metal.

If desired the substrate may be pre-treated in order to enhance adhesion of the ink thereto, e.g. using plasma, corona discharge or surfactant treatment. For example the substrate may be roughened, or it may be coated with an ink receptive coating.

In one embodiment the process further comprises drying the ink applied to the substrate at a temperature of at most 70°C, more preferably of at most 65°C and especially of at most 60°C.

A second aspect of the invention provides an ink-jet printing process wherein the ink according to the first aspect of the invention is printed onto a substrate by means of an ink jet printer. Preferably using an ink-jet printer with an ink re-circulating print-head.

The process of the present invention may use any ink-jet printer with an ink re-circulating print-head. Preferably the print-head has an ink re-circulation channel in the ink supply system. This channel allows for fresh ink to be available for jetting and can be part of the ink supply system or even specially engineered channels which run behind the nozzle plate. It is preferred that the ink supply system runs behind the nozzle plate as this allows for the use of more volatile inks whilst not compromising restart/latency behaviour. Behind nozzle plate re-circulation is exemplified in commercially available FUJIFILM Dimatix print-heads such as Samba® or SG1024®.

A third aspect of the present invention provides a substrate printed by an ink-jet printing process as described in the second aspect of the invention using an ink as described in the first aspect of the invention. This substrate is as described and preferred in the first aspect of the invention.

According to a fourth aspect of the present invention there is provided an ink-jet printer ink container (e.g. a cartridge or a larger ink tank), comprising an ink as defined in the second aspect of the present invention

A fifth aspect of the present invention provides an ink-jet printer with re-circulating printer head, as described in the second aspect of the invention, containing an ink, as described in the first aspect of the invention.

A sixth aspect of the invention provides an ink-set comprising a black ink, a cyan ink, a yellow ink and a magenta ink wherein the inks are as described and preferred in the first aspect of the invention. Preferably the pigment in the black ink is carbon black; in the cyan ink is Pigment Blue 15:3; in the yellow ink is Pigment Yellow 74; and in the magenta ink is Pigment Red 122.

### Examples

The present invention will now be illustrated by the following examples in which all parts are by weight unless stated to the contrary.

The self-dispersible pigment used was Pro-Jet® APD 1000 Black. Identical inks may be prepared using Pro-Jet® APD 1000 Cyan, Magenta and Yellow. The Pro-Jet® APD 1000 pigment dispersions are available from FUJIFILM Imaging Colorants Limited.

Surfynol® 465 is an ethoxylated acetylenic surfactant from Air Products.

Incorez® W835/177 is a polyurethane dispersion from Incorez. The glass transition temperature (Tg) of Incorez W835/177 was determined by means of differential scanning calorimetry and was found to be -15.3°C.

Rovene® 5499 is a styrene butadiene dispersion from Mallard Creek Polymers. The Tg of Rovene 5499 is 0°C.

1,2-Benzisothazolin-3-one was obtained as Proxel ® GXL (20% solution) from Lonza.

### Example 1

| **Component** | **Formulation At 100% Active (Wt%)** |
|---|---|
| Pigment | 2.00 |
| Glycerol | 3.75 |
| Ethylene glycol | 1.25 |
| 2 Pyrrolidone 95% | 5.00 |
| Surfynol 465 | 1.00 |
| 1,2-Benzisothazolin-3-one | 0.004 |
| Incorez W835/177 | 7.50 |
| PEG 20K | 5.70 |
| DI Water | to 100 |

### Example 2

| **Component** | **Formulation At 100% Active (Wt%)** |
|---|---|
| Pigment | 2.00 |
| Glycerol | 3.75 |
| Ethylene glycol | 1.25 |
| 2 Pyrrolidone 95% | 5.00 |
| Surfynol 465 | 1.00 |
| 1,2-Benzisothazolin-3-one | 0.004 |
| Incorez W835/177 | 5.00 |
| PEG 20K | 6.40 |
| DI Water | to 100 |

### Example 3

| **Component** | **Formulation At 100% Active (Wt%)** |
|---|---|
| Pigment | 2.00 |
| Glycerol | 3.75 |
| Ethylene glycol | 1.25 |
| 2 Pyrrolidone 95% | 5.00 |
| Surfynol 465 | 1.00 |
| 1.2-Benzisothazolin-3-one | 0.004 |
| Rovene 5499 | 5.00 |
| PEG 20K | 7.30 |
| DI Water | to 100 |

### Example 4

| **Component** | **Formulation At 100% Active (Wt%)** |
|---|---|
| Pigment | 2.00 |
| Glycerol | 5.00 |
| 2 Pyrrolidone 95% | 5.00 |
| Surfynol 465 | 1.00 |
| 1,2-Benzisothazolin-3-one | 0.004 |
| Rovene 5499 | 5.00 |
| PEG 20K | 7.30 |
| DI Water | to 100 |

Inks 1 to 3 were printed through a StarFire® SG1024 re-circulating print head from FUJIFILM Dimatix. The StarFire® SG1024 re-circulating print head is commonly only used with non-aqueous inks due to a tendency of its face plate to "wet" when used with aqueous inks, thus adversely effecting printer performance.

However all the example inks printed without any problems. The print head was photographed with a JetXpert drop watcher. There was no evidence of any face plate wetting with any of the inks of the present invention.

## Claims

1. An ink comprising:
(a) 0.1 to 10 parts of a self-dispersible pigment;
(b) 5 to 15 parts of a polymeric latex binder with a glass transition temperature in the range of from 0°C to -60°C;
(c) 5 to 15 parts of one or more polar organic solvent(s) with a solubility parameter at 25°C greater than 27.5;
(d) 0.1 to 3 parts of an acetylenic surfactant;
(e) 0.001 to 5 parts of biocide;
(f) 0 to 10 parts of a viscosity modifier;
(g) 0 to 5 parts of one or more organic solvents with a solubility parameter at 25°C less than 27.5;
(h) 0 to 5 parts of a cross linking agent; and
(i) the balance to 100 parts water;
where the ratio of latex binder to total organic solvent is in the range of from 1:3 to 3:1.

2. An ink as claimed in claim 1 where the ratio of latex binder to total organic solvent is in the range of from 1:2 to 2:1.

3. An ink as claimed in either claim 1 or claim 2 where in component (a) the self-dispersible pigment comprises a carboxy-functional dispersant crosslinked around a pigment core by a crosslinking agent having at least two groups selected from oxetane, carbodiimide, hydrazide, oxazoline, aziridine, isocyanate, N-methylol, keteneimine, isocyanurate and epoxy groups.

4. An ink as claimed in any one of the preceding claims where component (b), the polymeric latex binder, comprises an acrylic latex binder.

5. An ink as claimed in any one of claims 1 to 3 where component (b), the polymeric latex binder, comprises a polyurethane latex binder.

6. An ink as claimed in any one of claims 1 to 3 where component (b), the polymeric latex binder, comprises a polyester latex binder.

7. An ink as claimed in any one of claims 1 to 3 where component (b), the polymeric latex binder, comprises mixtures of acrylic latex binder and polyurethane latex binder; acrylic latex binder and polyester latex binder; polyester latex binder and polyurethane latex binder; or acrylic latex binder, polyester latex binder and polyurethane latex binder.

8. An ink as claimed in any one of the preceding claims where component (c) comprises a protic polar organic solvent.

9. An ink as claimed in any one of the preceding claims where component (c) comprises 1 to 3 solvents selected from the list consisting of; glycerol, 2-pyrrolidone, ethylene glycol and diethylene glycol.

10. An ink as claimed in any one of the preceding claims where component (d) is an ethylene oxide condensate of 2,4,7,9-tetramethyl-5-decyne-4,7-diol.

11. An ink as claimed in any one of the preceding claims where component (g) is 0.

12. An ink-jet printing process wherein the ink according to any one of claims 1 to 11 is printed onto a substrate using an ink-jet printer with an ink re-circulating print-head.

13. An ink-jet printer ink container tank comprising an ink as defined in any one of claim 1 to 11.

14. An ink-jet printer with a re-circulating printer head containing an ink, as described in any one of claim 1 to 11.

## Patentansprüche

1. Tinte, umfassend:
(a) 0,1 bis 10 Teile eines selbstdispergierbaren Pigments;
(b) 5 bis 15 Teile eines polymeren Latexbindemittels mit einer Glasübergangstemperatur im Bereich von 0 °C bis -60 °C;
(c) 5 bis 15 Teile eines oder mehrerer polarer organischer Lösungsmittel mit einem Löslichkeitsparameter bei 25 °C von mehr als 27,5;
(d) 0,1 bis 3 Teile eines acetylenischen Tensids;
(e) 0,001 bis 5 Teile Biozid;
(f) 0 bis 10 Teile eines Viskositätsmodifikator;
(g) 0 bis 5 Teile eines oder mehrerer organischer Lösungsmittel mit einem Löslichkeitsparameter bei 25 °C von weniger als 27,5;
(h) 0 bis 5 Teile eines Vernetzungsmittels; und
(i) Rest auf 100 Teile Wasser;
wobei das Verhältnis von Latexbindemittel zu gesamtem organischem Lösungsmittel im Bereich von 1:3 bis 3:1 liegt.

2. Tinte nach Anspruch 1, wobei das Verhältnis von Latexbindemittel zu gesamtem organischem Lösungsmittel im Bereich von 1:2 bis 2:1 liegt.

3. Tinte nach Anspruch 1 oder Anspruch 2, wobei in Komponente (a) das selbstdispergierende Pigment ein carboxylfunktionelles Dispergiermittel umfasst, das durch ein Vernetzungsmittel mit mindestens zwei Gruppen, die aus Oxetan-, Carbodiimid-, Hydrazid-, Oxazolin-, Aziridin-, Isocyanat-, N-Methylol-, Ketimin-, Isocyanurat- und Epoxidgruppen ausgewählt sind, um einen Pigmentkern vernetzt ist.

4. Tinte nach einem der vorhergehenden Ansprüche, wobei Komponente (b), das polymere Latexbindemittel, ein Acryl-Latexbindemittel umfasst.

5. Tinte nach einem der Ansprüche 1 bis 3, wobei Komponente (b), das polymere Latexbindemittel, ein Polyurethan-Latexbindemittel umfasst.

6. Tinte nach einem der Ansprüche 1 bis 3, wobei Komponente (b), das polymere Latexbindemittel, ein Polyester-Latexbindemittel umfasst.

7. Tinte nach einem der Ansprüche 1 bis 3, wobei Komponente (b), das polymere Latexbindemittel, eine Mischung von Acryl-Latexbindemittel und Polyurethan-Latexbindemittel; Acryl-Latexbindemittel und Polyester-Latexbindemittel; Polyester-Latexbindemittel und Polyurethan-Latexbindemittel oder Acryl-Latexbindemittel, Polyester-Latexbindemittel und Polyurethan-Latexbindemittel umfasst.

8. Tinte nach einem der vorhergehenden Ansprüche, wobei Komponente (c) ein protisches polares organisches Lösungsmittel umfasst.

9. Tinte nach einem der vorhergehenden Ansprüche, wobei Komponente (c) 1 bis 3 Lösungsmittel aus der Liste bestehend aus Glycerin, 2-Pyrrolidon, Ethylenglykol und Diethylenglykol umfasst.

10. Tinte nach einem der vorhergehenden Ansprüche, wobei es sich bei Komponente (d) um ein Ethylenoxid-Kondensat von 2,4,7,9-Tetramethyl-5-decin-4,7-diol handelt.

11. Tinte nach einem der vorhergehenden Ansprüche, wobei Komponente (g) gleich 0 ist.

12. Tintenstrahldruckverfahren, bei dem die Tinte gemäß einem der Ansprüche 1 bis 11 mit einem Tintenstrahldrucker mit einem Druckkopf mit Tintenrückführung auf ein Substrat aufgedruckt wird.

13. Tintenstrahldruckertintenbehältertank, umfassend eine Tinte gemäß einem der Ansprüche 1 bis 11.

14. Tintenstrahldrucker mit einem Druckerkopf mit Rückführung, enthaltend eine Tinte gemäß einem der Ansprüche 1 bis 11.

## Revendications

1. Encre comprenant :
(a) 0,1 à 10 parties d'un pigment auto-dispersible ;
(b) 5 à 15 parties d'un liant en latex polymère avec une température de transition vitreuse dans la gamme de 0 °C à -60 °C ;
(c) 5 à 15 parties d'un ou plusieurs solvants organiques polaires avec un paramètre de solubilité à 25 °C supérieur à 27,5 ;
(d) 0,1 à 3 parties d'un tensioactif acétylénique ;
(e) 0,001 à 5 parties de biocide ;
(f) 0 à 10 parties d'un modificateur de viscosité ;
(g) 0 à 5 parties d'un ou plusieurs solvants organiques avec un paramètre de solubilité à 25 °C inférieur à 27,5 ;
(h) 0 à 5 parties d'un agent de réticulation ; et
(i) le complément à 100 parties d'eau ;
le rapport entre liant en latex et solvant organique total se situant dans la gamme de 1:3 à 3:1.

2. Encre selon la revendication 1 dans laquelle le rapport entre liant en latex et solvant organique total se situe dans la gamme de 1:2 à 2:1.

3. Encre selon la revendication 1 ou la revendication 2 dans laquelle, dans le constituant (a), le pigment auto-dispersible comprend un dispersant carboxyfonctionnel réticulé autour d'un coeur de pigment par un agent de réticulation ayant au moins deux groupes choisis parmi les groupes oxétane, carbodiimide, hydrazide, oxazoline, aziridine, isocyanate, N-méthylol, cétèneimine, isocyanurate et époxy.

4. Encre selon l'une quelconque des revendications précédentes dans laquelle le constituant (b), le liant en latex polymère, comprend un liant en latex acrylique.

5. Encre selon l'une quelconque des revendications 1 à 3 dans laquelle le constituant (b), le liant en latex polymère, comprend un liant en latex de polyuréthane.

6. Encre selon l'une quelconque des revendications 1 à 3 dans laquelle le constituant (b), le liant en latex polymère, comprend un liant en latex de polyester.

7. Encre selon l'une quelconque des revendications 1 à 3 dans laquelle le constituant (b), le liant en latex polymère, comprend des mélanges de liant en latex acrylique et liant en latex de polyuréthane ; liant en latex acrylique et liant en latex de polyester ; liant en latex de polyester et liant en latex de polyuréthane ; ou liant en latex acrylique, liant en latex de polyester et liant en latex de polyuréthane.

8. Encre selon l'une quelconque des revendications précédentes dans laquelle le constituant (c) comprend un solvant organique polaire protique.

9. Encre selon l'une quelconque des revendications précédentes dans laquelle le constituant (c) comprend 1 à 3 solvants choisis dans la liste constituée par : le glycérol, la 2-pyrrolidone, l'éthylène glycol et le diéthylène glycol.

10. Encre selon l'une quelconque des revendications précédentes dans laquelle le constituant (d) est un condensat d'oxyde d'éthylène et de 2,4,7,9-tétraméthyl-5-décyne-4,7-diol.

11. Encre selon l'une quelconque des revendications précédentes dans laquelle le constituant (g) est 0.

12. Procédé d'impression par jet d'encre dans lequel l'encre selon l'une quelconque des revendications 1 à 11 est imprimée sur un substrat en utilisant une imprimante à jet d'encre avec une tête d'impression à recirculation d'encre.

13. Réservoir d'encre pour imprimante à jet d'encre comprenant une encre telle que définie dans l'une quelconque des revendications 1 à 11.

14. Imprimante à jet d'encre avec une tête d'impression à recirculation contenant une encre telle que décrite dans l'une quelconque des revendications 1 à 11.
